# FASCICULE DE BREVET EUROPEEN

(11) **EP 0 942 156 B1**
(45) Date de publication et mention de la délivrance du brevet: **29.10.2003**
(21) Numéro de dépôt: 99400587.4
(22) Date de dépôt: 10.03.1999
(51) Int. Cl.: F01N 3/04, F01N 5/02

(54) **Organe d'échappement à échangeur de chaleur**
Abgaswärmetauschervorrichtung
Exhaust heat exchanger device

(30) Priorité: 11.03.1998 FR 9802991
(43) Date de publication de la demande: 15.09.1999
(73) Titulaire: ECIA - EQUIPEMENTS ET COMPOSANTS POUR L'INDUSTRIE AUTOMOBILE, F-25400 Audincourt (FR)
(72) Inventeur: Rinckel, Francis, 70400 Champey (FR)
(74) Mandataire: Blot, Philippe Robert Emile

(56) Documents cités:
- DE-A- 3 509 016
- DE-C- 914 450
- DE-U- 29 611 034
- DE-U- 29 714 478

## Description

La présente invention concerne un organe d'échappement du type comportant un conduit d'échappement principal et une dérivation montée en parallèle sur le conduit principal, laquelle dérivation comporte un échangeur de chaleur, et dans lequel sont disposés des moyens mobiles d'obturation du conduit principal et des moyens mobiles de réglage de la section offerte au passage des gaz dans la dérivation.

Un tel organe d'échappement est décrit par exemple dans le brevet européen EP-B-0.058.842.

Cet organe d'échappement est destiné à recueillir de la chaleur des gaz d'échappement issus du moteur thermique d'un véhicule automobile pour transférer cette chaleur dans le circuit de refroidissement liquide du moteur.

Ce transfert thermique est particulièrement utile lors du démarrage à froid du véhicule, afin de permettre d'obtenir rapidement une température substantielle dans le circuit de refroidissement liquide du moteur. En effet, ce circuit de refroidissement du moteur est également utilisé pour le chauffage de l'habitacle du véhicule.

Ainsi, il est connu, grâce aux moyens d'obturation du conduit d'échappement principal, d'obliger les gaz d'échappement à circuler au travers de la dérivation renfermant l'échangeur de chaleur. De plus, il est connu, afin de favoriser l'échange de chaleur, d'ajuster la pression pour augmenter la température des gaz dans l'échangeur grâce aux moyens de réglage de la section de passage offerte aux gaz d'échappement dans la dérivation.

Dans les dispositifs connus et décrits notamment dans le brevet EP-B-0.058.842, les moyens d'obturation du conduit principal sont formés par une vanne disposée dans le conduit principal. Les moyens de réglage de la section de passage sont formés par une vanne trois voies disposée dans la dérivation. Cette dernière comporte deux sous-trajets distincts sélectivement offerts au passage des gaz d'échappement en fonction de la position de la vanne trois voies.

La vanne disposée dans le conduit principal et la vanne trois voies prévue dans la dérivation sont commandées indépendamment l'une de l'autre part deux actionneurs distincts.

La structure de l'organe d'échappement est donc complexe à réaliser industriellement, et l'organe d'échappement nécessite l'emploi de plusieurs actionneurs pour sa commande.

Par ailleurs, le document DE-U-29611034 décrit un organe d'échappement selon le préambule de la revendication 1.

L'invention a pour but de proposer un organe d'échappement qui soit simple à réaliser, peu coûteux et dont la commande puisse être exécutée facilement et pour un faible coût.

A cet effet, l'invention a pour objet un organe d'échappement tel que défini à la revendication 1.

Suivant des modes particuliers de réalisation l'organe d'échappement comporte l'une ou plusieurs des caractéristiques définies dans les revendications dépendantes.

L'invention sera mieux comprise à la lecture de la description qui va suivre, donnée uniquement à titre d'exemple et faite en se référant aux dessins sur lesquels :
- La figure 1 est une vue en coupe longitudinale d'un organe d'échappement selon l'invention représenté dans sa position initiale lors du démarrage du moteur ;
- La figure 2 est une section de l'organe d'échappement de la figure 1 prise suivant la ligne II-II ;
- Les figures 3 et 4 sont des vues en coupe longitudinale de l'organe d'échappement de la figure 1 représenté à des instants de commande distincts postérieurs au démarrage du moteur ;
- La figure 5 est une vue en coupe longitudinale d'une variante de réalisation de l'organe d'échappement de la figure 1 ;
- Les figures 6, 7 et 8 sont des vues en coupe longitudinale d'encore une autre variante de réalisation d'un organe d'échappement selon l'invention, représenté à des instants de commande successifs ; et
- Les figures 9 et 10 sont des vues en coupe de deux autres variantes de réalisation d'un organe d'échappement selon l'invention.

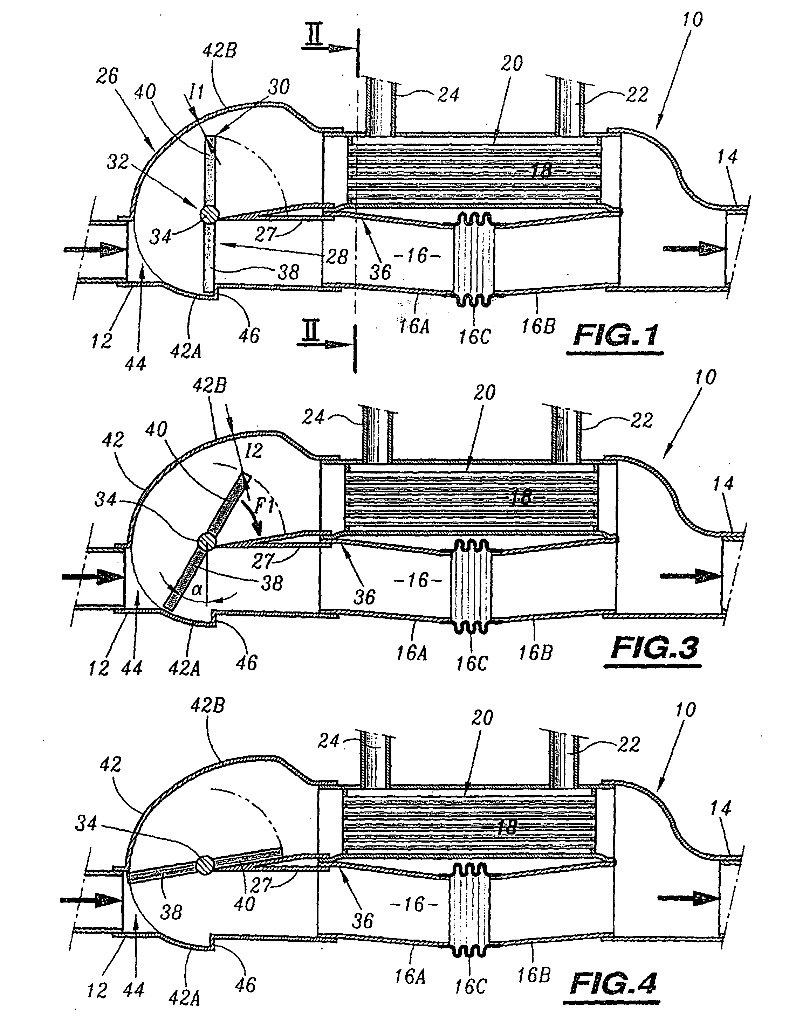

L'organe d'échappement 10 représenté sur la figure 1 est destiné à être inséré dans une ligne d'échappement d'un véhicule automobile à moteur thermique. Il comporte une entrée 12 pour l'arrivée des gaz d'échappement issus du moteur et une sortie 14 pour l'évacuation des gaz d'échappement dans l'atmosphère au travers d'autres éléments de la ligne d'échappement.

L'organe d'échappement comporte un conduit d'échappement principal 16 dans le prolongement duquel sont prévues les entrée 12 et sortie 14. Il comporte en outre une dérivation 18 montée en parallèle sur le conduit d'échappement principal 16 entre l'entrée 12 et la sortie 14.

Comme représenté sur la figure 1, le conduit principal 16 et la dérivation 18 sont délimités chacun par un tube métallique cylindrique ayant une section sensiblement rectangulaire avec l'une des faces bombée extérieurement en arc de cercle. Les deux tubes sont accolés longitudinalement suivant des surfaces planes en regard séparées par un intervalle d'air.

Le conduit principal 16 est formé par deux tronçons successifs 16A, 16B reliés l'un à l'autre par un organe de compensation de dilatation 16C. Cet organe est par exemple un soufflet métallique.

La dérivation 18 renferme un échangeur de chaleur 20 à contre-courant. Il est constitué d'un faisceau de tubes visible sur la figure 2. L'échangeur 20 est disposé longitudinalement dans la dérivation 18 au contact des gaz d'échappement. Le faisceau de tubes de l'échangeur 20 comporte une entrée 22 pour le fluide de refroidissement issu du moteur et une sortie 24 pour le fluide de refroidissement réchauffé envoyé vers l'installation de chauffage de l'habitacle du véhicule.

L'entrée 12 est reliée au conduit principal 16 et à la dérivation 18 par un divergent 26. Celui-ci comporte une entretoise médiane 27 ayant en section une forme d'épingle. Les parois en regard du conduit principal 16 et de la dérivation 18 ont leurs extrémités amont maintenues entre les deux bras de l'épingle.

Dans la région de raccordement amont, entre la dérivation 18 et le conduit principal 16, délimité par le divergent 26, sont disposés des moyens mobiles 28 d'obturation du conduit principal 16 et des moyens mobiles 30 de réglage de la section offerte au passage des gaz dans la dérivation 18.

Selon l'invention, l'organe d'échappement 10 comporte des moyens mécaniques 32 de synchronisation des moyens 28 d'obturation du conduit principal et des moyens 30 de réglage de la section de passage des gaz. Ces moyens de synchronisation 32 sont adaptés pour être accouplés à un unique organe d'actionnement non représenté disposé hors de l'organe d'échappement.

Dans le mode de réalisation des figures 1 à 4, les moyens mécaniques de synchronisation 32 comportent un arbre 34 disposé à l'extrémité de l'entretoise 27 prolongeant la séparation, notée 36, entre le conduit principal 16 et la dérivation 18. Cette séparation 36 est constituée des deux faces planes accolées des tubes 16 et 18.

L'arbre 34 est monté rotatif perpendiculairement au plan défini par le conduit principal 16 et la dérivation 18. Une des extrémités de l'arbre 34 fait saillie au dehors de l'organe d'échappement et comporte des moyens de liaison mécanique à l'unique organe d'actionnement.

Les moyens mobiles d'obturation 28 sont formés par un volet articulé 38, porté par l'arbre 34. Le volet 38 est monté déplaçable au travers du conduit principal 16.

De même, les moyens 30 de réglage de la section de passage des gaz comportent un volet articulé 40 porté par l'arbre 34 et mobile dans la dérivation 18.

Les volets 38 et 40 sont disposés dans un même plan de part et d'autre de l'arbre 34. Chaque volet a une forme sensiblement rectangulaire avec un côté libre en arc de cercle et est relié à l'arbre 34 suivant son côté opposé au côté en arc de cercle.

Le divergent amont 26 est délimité extérieurement par une paroi métallique 42 de forme sensiblement toroïdale engendrée par la rotation autour de l'arbre 34 d'un arc de cercle de diamètre légèrement supérieur à celui du conduit principal 16.

Ainsi, en dehors de l'ouverture de connexion, notée 44, de l'entrée 12 dans la région de raccordement amont 26, la paroi 42 présente en regard du volet 38 une paroi pleine notée 42A enveloppant la surface engendrée par le contour libre en arc de cercle du volet 38. Cette paroi pleine 42A est prolongée en aval par un épaulement 46 reliant celle-ci au conduit principal 16.

L'épaulement 46 définit un siège adapté pour coopérer avec le contour en arc de cercle du volet 38 et ainsi assurer l'obturation sensiblement étanche du conduit principal 16, comme représenté sur la figure 1.

Dans l'axe de la dérivation 18, la paroi toroïdale 42 est prolongée en amont de l'échangeur 20, par une paroi courbe divergente 42B formant une protubérance externe. La paroi 42B s'écarte progressivement de l'axe de l'arbre d'articulation 34 suivant le sens de passage des gaz.

En particulier, comme représenté sur les figures 1 et 3, la paroi divergente 42B s'écarte progressivement de la surface décrite par le contour libre du volet de réglage 40, lors de son déplacement depuis une position restreignant la section de passage des gaz (figure 1) jusqu'à une position dégageant la section de passage des gaz (figure 3). Cette surface d'enveloppe est représentée en traits mixtes sur les figures 1 et 3.

Dans la position représentée sur la figure 1, correspondant à la position initiale des volets 38 et 40, les gaz d'échappement issus du moteur sont contraints de circuler au travers de la dérivation 18. En effet, le volet d'obturation 38 est en appui contre le siège 46, ce qui interdit le passage des gaz au travers du conduite principal 16. Les gaz circulent ainsi au travers du passage de section réduite, notée l1, délimité entre le contour du volet de réglage 40 et la paroi divergente 42B, dans la région où celle-ci est proche de l'arbre 34.

Ainsi, les gaz arrivant dans la dérivation 18 subissent une forte accélération, du fait de la faible section de passage qui leur est offerte.

De plus, l'obturation complète du conduit principal 16 et la présence du volet de réglage 40 sur l'essentiel de la section de passage des gaz créent une perte de charge très importante, ce qui conduit à la création d'une contre-pression en sortie du moteur. Le moteur est ainsi conduit à produire une puissance calorifique accrue.

Ce mode de fonctionnement de l'organe d'échappement 10 correspond à la phase de démarrage d'un moteur initialement froid. Il permet une augmentation rapide de la température dans le circuit de refroidissement du moteur, par transfert rapide de chaleur dans l'échangeur 20, entre les gaz circulant à vitesse élevée et le fluide caloporteur circulant dans l'échangeur.

La rotation de l'arbre 34 provoque le basculement concomitant des volets 38 et 40 sous la commande de l'unique organe d'actionnement

Tant que l'angle de rotation de l'arbre 34 est inférieur à un angle α représenté sur la figure 3, le contour libre du volet d'obturation 38 suit la paroi pleine 42A. Ainsi, le conduit d'échappement principal 16 est maintenu fermé, malgré le décollement du volet 38 de son siège 46. En effet, le volet 38 affleure alors à la surface interne de la paroi pleine 42A.

Alors que le volet 38 obture toujours le conduit principal 16, le basculement simultané du volet de réglage 40 conduit à augmenter progressivement la section de passage offerte aux gaz d'échappement pour leur entrée dans la dérivation 18. En effet, la distance 12 séparant la paroi divergente 428 du contour libre du volet 40 augmente progressivement lors du basculement du volet 40 suivant le sens de la flèche F1, du fait de la forme évasée de la paroi 42B.

Au fur et à mesure de l'élévation de la température dans le circuit de refroidissement, l'organe unique d'actionnement commande le basculement progressif du volet 40, afin de réduire la pression, donc la puissance calorifique du moteur, et ainsi réduire le transfert thermique dans l'échangeur. Tant que l'angle de basculement est inférieur à l'angle α, le conduit d'échappement principal 16 est maintenu fermé, afin que sensiblement la totalité des gaz d'échappement circule au travers de l'échangeur 20.

Lorsque la température dans le circuit de refroidissement est jugée suffisante, l'arbre 34 est amené dans la position de la figure 4 sous la commande de l'unique organe d'actionnement. Dans cette position, le volet d'obturation 38 assure l'obturation de l'entrée de la dérivation 18, alors que le volet de réglage 40 est plaqué contre l'entretoise 27.

Dans cette position des volets 38 et 40, l'essentiel des gaz d'échappement circule au travers du conduit principal 16. Le circuit de refroidissement du moteur est ainsi isolé des gaz d'échappement circulant dans l'organe d'échappement 10. Cette configuration correspond au fonctionnement du véhicule en régime stationnaire, c'est-à-dire en dehors des phases de démarrage et/ou de faibles charges du moteur.

On comprend qu'avec un tel agencement, la fonction d'obturation du conduit principal et la fonction de réglage de la section de passage des gaz offerte en entrée de la dérivation 18 sont assurées par un même organe mécanique de structure simple. Ainsi, le coût de réalisation de l'organe d'échappement est réduit. De plus, un unique organe de commande est suffisant pour permettre la commande des deux volets.

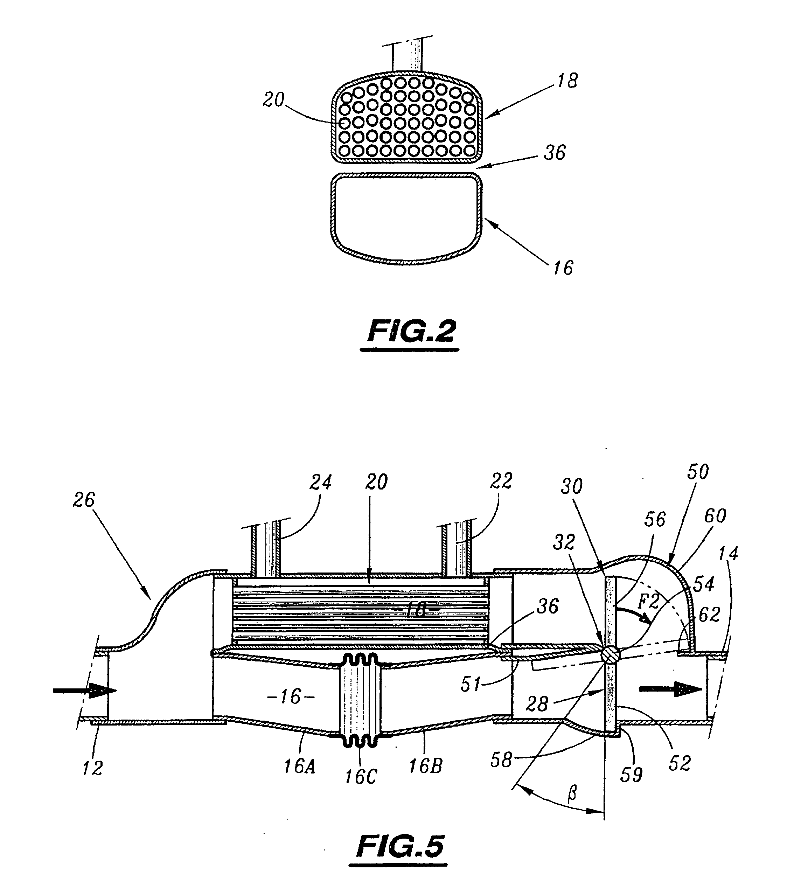

Sur la figure 5, est représentée une variante de réalisation de l'organe d'échappement selon l'invention.

Pour tous les modes de réalisation décrits, les éléments identiques ou analogues à ceux des figures 1 à 4 sont désignés par les mêmes numéros de référence.

Contrairement au mode de réalisation des figures précédentes, dans lesquels les moyens 28 d'obturation du conduit principal et les moyens 30 de réglage de la section offerte au passage des gaz dans la dérivation 18 sont disposés dans la région de raccordement amont, ces moyens sont disposés, dans ce mode de réalisation, dans la région de raccordement aval du conduit principal 16 et de la dérivation 18. Celle-ci est délimitée par un convergent, noté 50, reliant la sortie 14 au conduit principal 16 et à la dérivation 18. Le convergent 50 est séparé par une entretoise 51 en forme d'épingle dans laquelle sont reçues les extrémités des parois en regard du conduit 16 et de la dérivation 18.

Comme précédemment, les moyens d'obturation du conduit 16 comportent un volet 52 porté par un arbre rotatif 54 disposé à l'extrémité aval de la séparation 36 formée par l'entretoise 51. Les moyens de réglage 30 de la section offerte au passage des gaz comportent un volet de réglage 56 articulé dans la dérivation 18 en aval de l'échangeur 20.

Le volet de réglage 56 est porté par l'arbre 54 dans le prolongement du volet d'obturation 52. Les volets 52 et 56 ont tous deux une forme rectangulaire avec un côté en arc de cercle comme dans le mode de réalisation précédent. Ils sont accouplés dans un même plan de part et d'autre de l'arbre 54 suivant un côté opposé au côté en arc de cercle.

La paroi incurvée du convergent 50 prolongeant le conduit principal 16 est déformée en regard du contour libre du volet 52. Ainsi, elle comporte une paroi pleine 58 enveloppant la surface engendrée par le contour libre en arc de cercle du volet 52, pour un angle limite de rotation β de celui-ci autour de l'arbre 54. La paroi pleine 58 est reliée en aval à la partie courante du convergent 50 par un épaulement 59 constituant un siège d'appui du volet d'obturation 52 lorsque celui-ci est dans sa position initiale.

La paroi incurvée de la région de raccordement 50 disposée en regard du contour libre du volet de réglage 56 présente un renflement externe. Elle est déformée vers l'extérieur pour former une paroi courbe divergente 60 s'écartant progressivement de l'arbre 54 suivant le sens de basculement du volet 56 indiqué par la flèche F2. En particulier, la paroi divergente 60 s'écarte progressivement de la surface décrite par le contour libre du volet 56 lors de la rotation de l'arbre 54 d'un angle β.

Dans le prolongement de l'entretoise 51, la région de raccordement délimitée par le divergent 50 est limitée intérieurement par un rebord 62 constituant un siège d'appui du volet de réglage 56.

Dans ce mode de réalisation, comme le précédent, on comprend que, lorsque les volets 52 et 56 sont dans leur position initiale, représentée en traits pleins sur la figure 5, le volet 52, en appui sur le siège 59, garantit une obturation complète du conduit principal 16. Le volet de réglage 56 délimite alors, avec la paroi divergente 60, une section de passage réduite pour les gaz d'échappement circulant au travers de la dérivation 18.

Pour des angles de basculement de l'arbre 54 inférieurs à l'angle limite β, le volet 52 maintient le conduit principal 16 obturé. En effet, le bord libre du volet 52 est alors disposé le long de la paroi pleine 58 formant enveloppe. Au fur et à mesure du basculement de l'arbre 54, et pour un angle inférieur à l'angle β, l'intervalle entre le bord libre du volet de réglage 56 et la paroi divergente 60 augmente progressivement, ce qui accroît la section offerte au passage des gaz au travers de la dérivation 18.

Lorsque le moteur fonctionne en régime établi, le volet 56 de réglage est rabattu sur le rebord 62 comme représenté en traits mixtes sur la figure 5. Il obture alors la dérivation 18 en aval de l'échangeur 20. Dans cette position, le volet d'obturation 52 est plaqué contre la paroi de séparation 36, de sorte que les gaz d'échappement sont libres de circuler sur pratiquement toute la section du conduit principal 16.

Dans ce mode de réalisation; comme dans le précédent, la réalisation et la commande des moyens 28 d'obturation du conduit principal et des moyens 30 de réglage de la section de passage offerte aux gaz sont très simples.

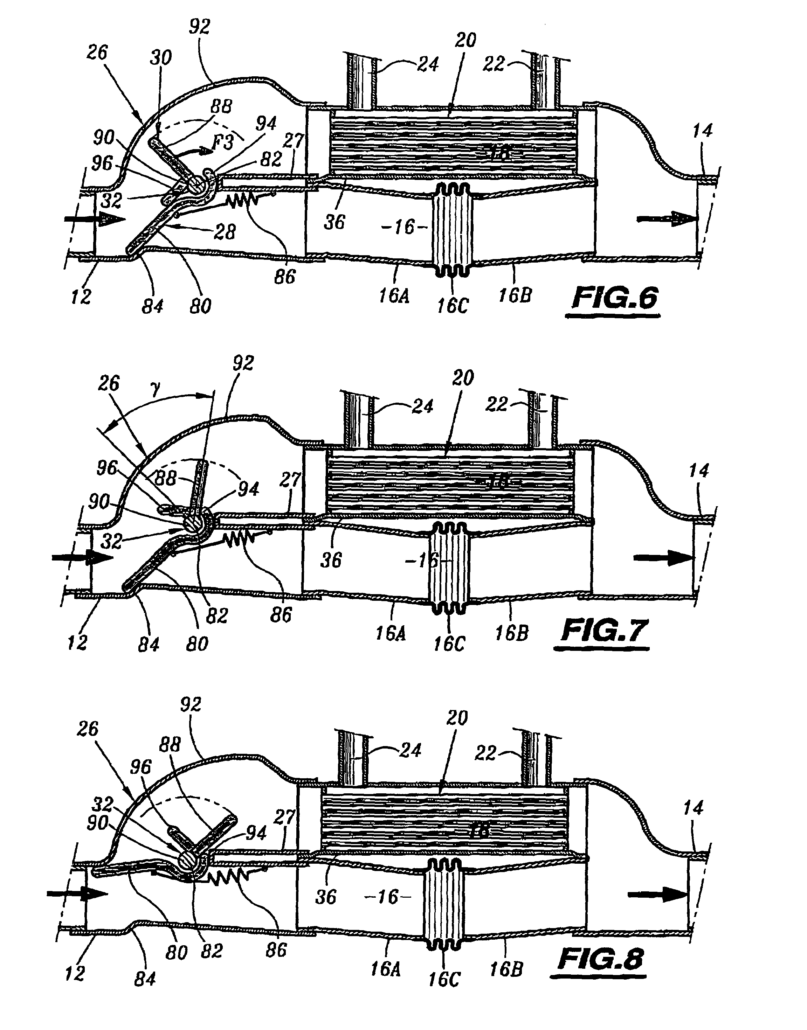

Dans la variante de réalisation des figures 6 à 8, les moyens 28 d'obturation du conduit principal 16 et les moyens 30 de réglage de la section offerte au passage des gaz dans la dérivation 18 sont disposés dans le divergent 26 délimitant la région amont de connexion du conduit principal 16 à la dérivation 18.

Dans ce mode de réalisation, les moyens 28 d'obturation du conduit principal 16 comportent un volet d'obturation 80 monté librement articulé autour d'un axe 82 prévu à l'extrémité amont de la séparation 36. Le volet 80 s'étend perpendiculairement au plan défini par le conduit principal 16 et la dérivation 18.

Le divergent 26 comporte, en amont du conduit principal 16, une déformation 84 dans sa paroi incurvée formant un siège d'appui pour le contour du volet 80.

Le volet 80 est maintenu plaqué contre le siège 84 par l'intermédiaire d'un moyen élastique 86 constitué par exemple d'un ressort hélicoïdal. Une extrémité de celui-ci est fixée à l'entretoise 36 et l'autre extrémité est fixée au volet 80.

Les moyens 30 de réglage de la section offerte au passage des gaz dans la dérivation 18 comportent un volet 88 porté par un arbre 90 s'étendant suivant l'axe 82. L'arbre 90 comporte des moyens de couplage à un organe d'actionnement unique disposé au dehors de l'organe d'échappement.

La paroi incurvée du divergent 26 présente, en amont de la dérivation 18, un renflement externe définissant une paroi divergente bombée 92 s'éloignant progressivement de l'axe 82 en se rapprochant de l'échangeur 20.

Dans sa zone d'articulation autour de l'arbre 90, le volet d'obturation 80 comporte une butée 94 disposée en arrière du volet 88 en considérant le sens d'articulation de celui-ci. Dans la position initiale représentée sur la figure 6, la butée 94 est angulairement espacée du volet 88.

De plus, le volet 88 comporte un bras 96 de rappel du volet 80 dans sa position d'obturation du conduit principal. Ce bras 96 s'étend perpendiculairement au volet 88, du côté de l'arrivée des gaz. Il est adapté pour coopérer dans certaines positions du volet 88 avec la face amont du volet d'obturation 80.

Lors de la mise en route du moteur, le volet 80, soumis à la traction du ressort 86, est en appui sur le siège 84. Il assure ainsi l'obturation complète du conduit principal 16. Le volet de réglage 88 est disposé en regard d'une région de la paroi divergente 92 qui est proche de l'axe 82. Ainsi, la section offerte au passage des gaz au travers de la dérivation 18 est réduite.

Dans cette position, le bras 96 est appliqué contre la face amont du volet d'obturation 80.

Afin d'accroître cette section de passage, l'arbre 90 portant le volet 88 est déplacé angulairement, ce qui conduit au basculement du volet de réglage 88 suivant le sens de la flèche F3. Celui-ci se trouve alors, comme représenté sur la figure 7, en regard d'une région de la paroi divergente 92 éloignée de l'axe 82. Ainsi, la section offerte au passage des gaz peut être progressivement et sélectivement accrue.

Tant que le volet 88 est écarté de la butée 94, le volet d'obturation 80 reste en appui sur le siège 84 sous l'action de la traction du ressort 86.

Pour une rotation du volet de réglage 88 supérieure à un angle limite γ, celui-ci vient en appui sur la butée 94. Lors de son basculement ultérieur, il entraîne alors avec lui le volet d'obturation 80 qui quitte son appui sur le siège 84. Le basculement continu du volet de réglage 88 conduit à ce que le volet d'obturation passe de sa position d'obturation du conduit principal 16, comme représenté sur la figure 7, à une position d'obturation de la dérivation 18, comme représenté sur la figure 8. Le volet d'obturation est alors en appui sur le bord de la paroi divergente 92.

Par la commande en sens inverse de l'unique organe d'actionnement, le volet 88 peut être ramené dans une position antérieure. En particulier, lorsque le volet d'obturation 80 n'est plus sollicité par le volet de réglage 88, celui-ci reprend sa position d'obturation du conduit principal 16 sous l'action du ressort 86.

En cas de rupture du ressort 86, le bras 96, en appui sur le volet 80, assure le basculement de celui-ci vers sa position d'obturation, lorsque le volet 88 est ramené dans sa position de la figure 6, dans laquelle il restreint la section de passage des gaz dans la dérivation 18. Ainsi, même en cas de rupture du ressort 86, le dispositif peut fonctionner suivant un mode dégradé.

Dans ce mode de réalisation, l'obturation du conduit principal 16 et le réglage de la section de passage des gaz dans la dérivation 18 sont obtenus facilement et à faible coût. De plus, ces deux moyens sont commandés par un unique actionneur.

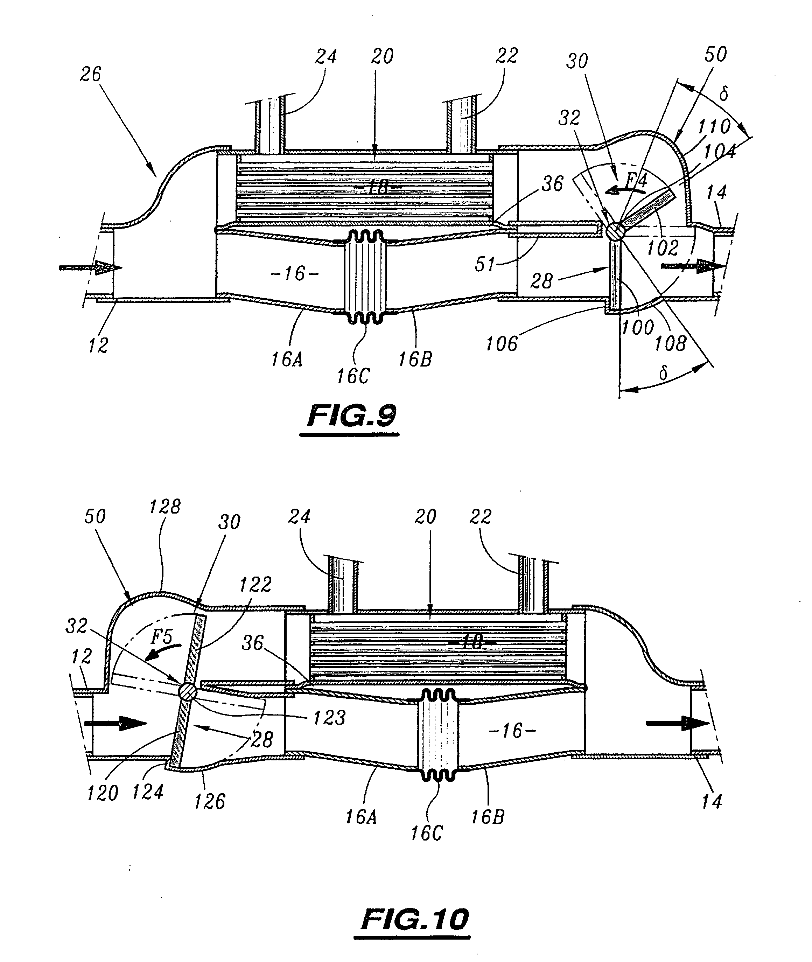

Sur les figures 9 et 10 sont représentés deux modes de réalisation de l'organe d'échappement selon l'invention permettant un fonctionnement du véhicule même en cas de dégradation de l'organe de commande unique actionnant les moyens mobiles 28 de réglage et les moyens mobiles 30 d'obturation.

A cet effet, dans les deux variantes, le volet d'obturation 30 se déplace vers sa position d'obturation à l'encontre du sens du flux gazeux circulant dans le conduit principal. Ainsi, en cas de rupture de l'unique organe de commande, les gaz d'échappement circulant dans le conduit principal tendent à pousser le volet d'obturation vers sa position effacée, dans laquelle le conduit 16 est ouvert, permettant un fonctionnement en mode dégradé de la ligne d'échappement du véhicule.

Plus précisément, l'organe d'échappement de la figure 9 est sensiblement analogue à celui de la figure 5, les moyens d'obturation 28 et les moyens 30 de réglage de la section de passage étant disposés dans le convergent 50 disposé en aval du conduit principal 16 et de la dérivation 18.

Ces moyens sont formés respectivement par des volets articulés 100, 102 portés par un arbre unique 104 formant les moyens 32 de synchronisation.

Les volets 100 et 102 définissent un angle d'environ 120°. La paroi du convergent 50 prolongeant le conduit principal 16 présente un creux comportant successivement, suivant le sens d'écoulement des gaz, un épaulement 106 prolongé par une paroi toroïdale 108 centré sur l'arbre 104. La paroi 108 est définie par l'enveloppe engendrée par le contour libre du volet d'obturation 100.

En regard du volet de réglage 102, la paroi, notée 110, du convergent 50 s'écarte progressivement de l'arbre 104, dans le sens inverse des aiguilles d'une montre, pour un débattement angulaire δ correspondant à l'étendue angulaire de la paroi toroïdale 108.

Ainsi, lors d'un déplacement du volet de réglage 102 dans le sens de la flèche F4, la section offerte au passage des gaz dans la dérivation 18 s'accroît progressivement.

Dans ce mode de réalisation, comme dans les précédents, lorsque le volet d'obturation est plaqué contre le siège formé par l'épaulement 106, les gaz d'échappement circulent uniquement dans la dérivation 18 et une forte contre-pression est créée en aval du moteur.

Pour des angles de basculement des volets 100 et 102 inférieurs à δ, le conduit principal reste obturé et la section offerte au gaz dans la dérivation 18 s'accroît progressivement, réduisant la perte de charge créée.

Pour un basculement des volets d'un angle supérieur à l'angle δ, et notamment égal à 90°, le volet d'obturation 100 obture la sortie de la dérivation 18, comme représenté en trait mixte sur la figure 9. Dans cette position, le volet 100 permet un passage des gaz sur toute la section du conduit principal 16.

On comprend que le volet d'obturation 100 étant déplaçable de sa position d'obturation vers sa position d'ouverture du conduit principal 16, suivant le sens de l'écoulement des gaz d'échappement dans le conduit principal 16, en cas de rupture de la commande de l'arbre 104, le volet 100 sera maintenu par les gaz d'échappement dans une position permettant le passage des gaz au travers du conduit principal 16.

Le mode de réalisation de la figure 10 est sensiblement analogue à celui des figures 1 à 4. Toutefois, les volets d'obturation et de réglage, notés 120 et 122, portés par un arbre 123, sont articulés en sens opposés de leur position initiale à leur position finale.

Ainsi, l'épaulement noté 124 d'appui du volet d'obturation 120 et la paroi toroïdale 126 sont disposés successivement suivant le sens d'écoulement des gaz d'échappement.

De même, la paroi divergente notée 128, prévue en avant de la dérivation 18, s'écarte progressivement de l'arbre portant les volets suivant le sens de la flèche F5.

On conçoit que, dans ce mode de réalisation également, en cas de rupture de l'organe de commande, les gaz d'échappement provoquent l'ouverture du conduit principal 16 par basculement du volet d'obturation 120 suivant le sens de la flèche F5.

## Revendications

1. Organe d'échappement (10) du type comportant un conduit d'échappement principal (16) et une dérivation (18) montée en parallèle sur le conduit principal (16), laquelle dérivation (18) comporte un échangeur de chaleur (20), et dans lequel sont disposés des moyens mobiles (28) d'obturation du conduit principal (16) et des moyens mobiles (30) de réglage de la section offerte au passage des gaz dans la dérivation (18), l'organe d'échappement comportant des moyens mécaniques (32) de synchronisation des moyens (28) d'obturation du conduit principal (16) et des moyens (30) de réglage de la section de passage des gaz dans la dérivation (18), sous la commande d'un unique organe d'actionnement, **caractérisé en ce que** lesdits moyens mécaniques de synchronisation (32) sont adaptés pour assurer successivement, sous la commande de l'unique organe d'actionnement, lors d'une phase initiale, l'augmentation progressive de la section offerte au passage des gaz dans la dérivation (18) sous l'action des moyens (30) de réglage de la section de passage des gaz dans la dérivation (18), en maintenant le conduit principal (16) sensiblement obturé, et, lors d'une phase ultérieure, l'ouverture du conduit principal (16) sous l'action des moyens (28) d'obturation du conduit principal (16).

2. Organe d'échappement selon la revendication 1, **caractérisé en ce que** les moyens mobiles (28) d'obturation du conduit principal (16) sont disposés dans une région (26) de raccordement de la dérivation (18) au conduit principal (16), et **en ce que** les moyens mobiles d'obturation (28) sont déplaçables entre une position d'obturation du conduit principal (16) et une position d'obturation de la dérivation (18).

3. Organe d'échappement selon l'une quelconque des revendications 1 à 2, **caractérisé en ce que** les moyens mobiles de réglage (30) comportent un volet de réglage (40; 56; 102 ; 122) articulé dans la dérivation (18) et porté par un arbre (34; 54 ; 104 ; 123) muni de moyens d'accouplement à l'unique organe d'actionnement, et **en ce que** les moyens mobiles d'obturation (28) comportent un volet d'obturation (38 ; 52 ;100 ;120) articulé dans le conduit principal (16), lequel volet d'obturation (38 ; 52 ; 100 ; 120) est porté par le même arbre (34 ; 54 ; 104 ; 123) que le volet de réglage (40; 56 ; 102 ; 122).

4. Organe d'échappement selon la revendication 3, **caractérisé en ce que** le conduit principal (16) comporte un siège (46 ; 59 ; 106 ; 124) adapté pour coopérer avec le volet d'obturation (38 ; 52 ; 100 ; 120) pour la fermeture du conduit principal (16), et **en ce que** le siège (46 ; 59 ; 106 ; 124) est prolongé par une paroi pleine (42A; 58; 108; 126) enveloppant la surface décrite par le contour libre du volet d'obturation (38 ; 52 ; 100 ; 120) lors de ladite phase initiale de fonctionnement sous la commande de l'unique organe d'actionnement.

5. Organe d'échappement selon la revendication 1 ou 2, **caractérisé en ce que** lesdits moyens mobiles d'obturation (28) comportent un volet d'obturation (80) mobile dans le conduit principal (16), lesdits moyens (30) de réglage de la section offerte au passage des gaz comportent un volet (88) de réglage mobile dans la dérivation (18), et **en ce que** lesdits moyens de synchronisation (32) comportent des moyens (90) d'en-traînement du volet de réglage (88), sous la commande dudit organe d'actionnement unique, et des moyens (94) d'entraînement du volet d'obturation (80) sous la commande dudit volet de réglage (88).

6. Organe d'échappement selon la revendication 5, **caractérisé en ce que** le volet d'obturation (80) et le volet de réglage (88) sont articulés autour d'un même axe (82), et **en ce que** le volet d'obturation (80) comporte une butée (94) d'appui du volet de réglage (88), pour provoquer l'entraînement du volet d'obturation (80) sous la commande du volet de réglage (88), lors du déplacement du volet de réglage (88) en appui sur la butée (94).

7. Organe d'échappement selon la revendication 5 ou 6, **caractérisé en ce qu'**il comporte un moyen élastique (86) de rappel du volet d'obturation (80) dans sa position d'obturation du conduit principal (16).

8. Organe d'échappement selon l'une quelconque des revendications 1 à 7, **caractérisé en ce que**, en regard de la région de déplacement du volet de réglage (40 ; 56 ; 88 ; 102 ; 122), la paroi (42B ; 60 ; 92 ; 110 ; 128) de la dérivation (18) s'écarte progressivement, sur au moins une partie de sa longueur, de la surface décrite par le contour libre du volet de réglage (40 ; 56 ; 88 ; 102 ; 122) lors de son déplacement d'une position restreignant la section offerte au passage des gaz jusqu'à une position dégageant la section offerte au passage des gaz.

9. Organe d'échappement selon la revendication 8, **caractérisé en ce que** le volet de réglage (40 ; 56; 88 ; 102 ; 122) est articulé autour d'un axe (34 ; 54; 82 ; 104 ; 123) et **en ce que** ladite paroi (42B ; 60 ; 92 ; 110 ; 128) de la dérivation (18) décrit, sur au moins une partie de sa longueur, un profil courbe divergent autour de l'axe (34 ; 54 ; 82 ; 104 ; 123) suivant le sens de déplacement du volet de réglage (40; 56; 88; 102 ; 122) de sa position restreignant la section offerte au passage des gaz, jusqu'à sa position dégageant la section offerte au passage des gaz.

10. Organe d'échappement selon l'une quelconque des revendications précédentes, **caractérisé en ce que** le volet d'obturation (100 ; 120) est monté déplaçable, de sa position d'obturation du conduit principal (16), vers une position effacée dans laquelle le conduit principal (16) est ouvert, suivant le sens d'écoulement des gaz dans le conduit principal (16).

11. Organe d'échappement selon l'une quelconque des revendications précédentes, **caractérisé en ce que** le conduit principal (16) comporte un organe de compensation de dilatation (16C).

## Claims

1. Exhaust member (10) of the type comprising a main exhaust pipe (16) and a branch (18) mounted in parallel on the main pipe (16), said branch (18) comprising a heat exchanger (20), and wherein moveable means (28) for closing off the main pipe (16) and moveable means (30) for regulating the cross-section available for the flow of gases into the branch (18) are provided, the exhaust member comprising mechanical means (32) for synchronising the means (28) for closing off the main pipe (16) and means (30) for regulating the cross-section for the flow of gases into the branch (18) , under the control of a single actuating member, **characterised in that** said mechanical synchronising means (32) are adapted to ensure successively, under the control of the single actuating member, during an initial phase, a progressive increase in the cross-section available for the flow of gases into the branch (18) under the effect of the means (30) for regulating the cross-section of flow of the gases in the branch (18), while keeping the main pipe (16) substantially closed off, and, in a subsequent phase, opening the main pipe (16) under the effect of the means (28) for closing off the main pipe (16).

2. Exhaust member according to claim 1, **characterised in that** the moveable means (28) for closing off the main pipe (16) are disposed in a region (26) connecting the branch (18) to the main pipe (16), and **in that** the moveable closing means (28) are displaceable between a position closing off the main pipe (16) and a position closing off the branch (18).

3. Exhaust member according to any one of claims 1 to 2, **characterised in that** the moveable regulating means (30) comprise a regulating shutter (40; 56; 102; 122) articulated in the branch (18) and carried by a shaft (34; 54; 104; 123) provided with means for coupling to the single actuating member, and **in that** the moveable closing means (28) comprise a closing shutter (38; 52; 100; 120) articulated in the main pipe (16), this closing shutter (38; 52; 100; 120) being carried by the same shaft (34; 54; 104; 123) as the regulating shutter (40; 56; 102; 122).

4. Exhaust member according to claim 3, **characterised in that** the main pipe (16) comprises a seat (46; 59; 106; 124) adapted to cooperate with the closing shutter (38; 52; 100; 120) for closing off the main pipe (16), and **in that** the seat (46; 59; 106; 124) is extended by a solid wall (42A; 58; 108; 126) enveloping the surface described by the free contour of the closing shutter (38; 52; 100; 120) during the initial operating phase under the control of the single actuating member.

5. Exhaust member according to claim 1 or 2, **characterised in that** the moveable closing means (28) comprise a closing shutter (18) which is moveable in the main pipe (16), said means (30) for regulating the cross-section available for the flow of gases comprising a regulating shutter (88) which is moveable in the branch (18), and **in that** the synchronising means (32) comprise means (90) for driving the regulating shutter (88) under the control of said single actuating member, and means (94) for driving the closing shutter (80) under the control of said regulating shutter (88).

6. Exhaust member according to claim 5, **characterised in that** the closing shutter (80) and the regulating shutter (88) are articulated about a common spindle (82) and **in that** the closing shutter (80) comprises an abutment (94) for supporting the regulating shutter (88), to cause the closing shutter (80) to be driven under the control of the regulating shutter (88) when the regulating shutter (68) bearing on the abutment (94) is moved.

7. Exhaust member according to claim 5 or 6, **characterised in that** it comprises resilient means (86) for returning the closing shutter (80) to its position closing off the main pipe (16).

8. Exhaust member according to any one of claims 1 to 7, **characterised in that**, facing the area of displacement of the regulating shutter (40; 56; 88; 102; 122), the wall (42B; 60; 92; 110; 128) of the branch (18) moves progressively away, over at least part of its length, from the surface described by the free contour of the regulating shutter (40; 56; 88; 102; 122) during its movement from a position restricting the cross-section available for the flow of gases into a position opening up the cross-section available for the flow of gases.

9. Exhaust member according to claim 8, **characterised in that** the regulating shutter (40; 56; 88; 102; 122) is articulated about a spindle (34; 54; 82; 104; 123) and **in that** said wall (42B; 60; 92; 110; 128) of the branch (18) describes, over at least part of its length, a curved profile diverging about the axis (34; 54; 82; 104; 123) in the direction of movement of the regulating shutter (40; 56; 88; 102; 122) from its position restricting the cross-section available for the flow of gases into its position opening up the cross-section available for the flow of gases.

10. Exhaust member according to any one of the preceding claims, **characterised in that** the closing shutter (100; 120) is mounted to be moveable, from its position closing off the main pipe (16), into a retracted position in which the main pipe (16) is open in the direction of flow of the gases into the main pipe (16).

11. Exhaust member according to any one of the preceding claims, **characterised in that**.the main pipe (16) comprises expansion compensating means (16C).

## Patentansprüche

1. Auspufforgan (10), das eine Hauptauspuffleitung (16) und eine zur Hauptleitung (16) parallel geschaltete Zweigleitung (18), die einen Wärmetauscher (20) aufweist, umfaßt und in dem bewegliche Mittel (28) zum Verschließen der Hauptleitung (16) und bewegliche Mittel (30) zum Verstellen des dem Durchgang der Gase in der Zweigleitung (18) gebotenen Querschnitts angeordnet sind, wobei das Auspufforgan mechanische Mittel (32) zur Synchronisierung der Mittel (28) zum Verschließen der Hauptleitung (16) und der Mittel (30) zur Verstellung des Durchgangsquerschnitts der Gase in der Zweigleitung (18) unter der Steuerung durch ein einziges Betätigungsorgan aufweist, **dadurch gekennzeichnet, daß** die mechanischen Synchronisierungsmittel (32) dafür ausgelegt sind, nacheinander unter der Steuerung durch das einzige Betätigungsorgan in einer Anfangsphase die allmähliche Vergrößerung des dem Durchgang der Gase in der Zweigleitung (18) gebotenen Querschnitts unter der Einwirkung der Mittel (30) zum Verstellen des Durchgangsquerschnitts der Gase in der Zweigleitung (18) zu gewährleisten, indem die Hauptleitung (16) im wesentlichen geschlossen gehalten wird, und in einer späteren Phase die Öffnung der Hauptleitung (16) unter der Einwirkung der Mittel (28) zum Verschließen der Hauptleitung (16) zu gewährleisten.

2. Auspufforgan nach Anspruch 1, **dadurch gekennzeichnet, daß** die beweglichen Mittel (28) zum Verschließen der Hauptleitung (16) in einem Bereich (26) der Verbindung der Zweigleitung (18) mit der Hauptleitung (16) angeordnet sind und daß die beweglichen Verschlußmittel (28) zwischen einer Stellung des Verschlusses der Hauptleitung (16) und einer Stellung des Verschlusses der Zweigleitung (18) beweglich sind.

3. Auspufforgan nach einem der Ansprüche 1 bis 2, **dadurch gekennzeichnet, daß** die beweglichen Verstellmittel (30) eine Stellklappe (40; 56; 102; 122) umfassen, die in der Zweigleitung (18) verschwenkbar ist und von einer Welle (34; 54; 104; 123) getragen ist, die mit Mitteln zum Koppeln mit dem einzigen Betätigungsorgan versehen ist, und daß die beweglichen Verschlußmittel (28) eine Schließklappe (38; 52; 100; 120) umfassen, die in der Hauptleitung (16) verschwenkbar ist und von derselben Welle (34; 54; 104; 123) wie die Stellklappe (40; 56; 102; 122) getragen ist.

4. Auspufforgan nach Anspruch 3, **dadurch gekennzeichnet, daß** die Hauptleitung (16) einen Sitz (46; 59; 106; 124) aufweist, der dafür ausgelegt ist, mit der Schließklappe (38; 52; 100; 120) bei der Schließung der Hauptleitung (16) zusammenzuwirken, und daß der Sitz (46; 59; 106; 124) durch eine volle Wand (42A; 58; 108; 126) verlängert wird, die die Fläche umhüllt, die von dem freien Umriß der Schließklappe (38; 52; 100; 120) in der Anfangsphase des Betriebs unter der Steuerung durch das einzige Betätigungsorgan beschrieben wird.

5. Auspufforgan nach Anspruch 1 oder 2, **dadurch gekennzeichnet, daß** die beweglichen Verschlußmittel (28) eine bewegliche Schließklappe (80) in der Hauptleitung (16) aufweisen, wobei die Mittel (30) zur Verstellung des dem Durchgang der Gase gebotenen Querschnitts eine bewegliche Stellklappe (88) in der Zweigleitung (18) aufweisen und daß die Synchronisierungsmittel (32) Mittel (90) zur Mitnahme der Stellklappe (88) unter der Steuerung durch das einzige Betätigungsorgan und Mittel (94) zur Mitnahme der Schließklappe (80) unter der Steuerung durch die Stellklappe (88) aufweisen.

6. Auspufforgan nach Anspruch 5, **dadurch gekennzeichnet, daß** die Schließklappe (80) und die Stellklappe (88) auf einer gemeinsamen Achse (82) angelenkt sind und daß die Schließklappe einen Anschlag (94) zum Anliegen der Stellklappe (88) aufweist, um bei der Bewegung der an dem Anschlag (94) anliegenden Stellklappe (88) die Mitnahme der Schließklappe (80) unter der Steuerung durch die Stellklappe (88) zu bewirken.

7. Auspufforgan nach Anspruch 5 oder 6, **dadurch gekennzeichnet, daß** es ein elastisches Mittel (86) zur Zurückholung der Schließklappe (80) in ihre Stellung des Verschlusses der Hauptleitung (16) aufweist.

8. Auspufforgan nach einem der Ansprüche 1 bis 7, **dadurch gekennzeichnet, daß** die Wand (42B; 60; 92; 110; 128) der Zweigleitung (18) sich gegenüber des Bewegungsbereichs der Stellklappe (40; 56; 88; 102; 122) auf mindestens einem Teil ihrer Länge allmählich von der Fläche entfernt, die von dem freien Umriß der Stellklappe (40; 56; 88; 102; 122) bei ihrer Bewegung aus einer Stellung, die den dem Durchgang der Gase gebotenen Querschnitt einschränkt, in eine Stellung beschrieben wird, die den dem Durchgang der Gase gebotenen Querschnitt freilegt.

9. Auspufforgan nach Anspruch 8, **dadurch gekennzeichnet, daß** die Stellklappe (40; 56; 88; 102; 122) an einer Achse (34; 54; 82; 104; 123) angelenkt ist und daß die Wand (42B; 60; 92; 110; 128) der Zweigleitung (18) auf mindestens einem Teil ihrer Länge ein gekrümmtes Profil beschreibt, das um die Achse (34; 54; 82; 104; 123) herum in Richtung der Bewegung der Stellklappe (40; 56; 88; 102; 122) von ihrer Stellung, die den dem Durchgang der Gase gebotenen Querschnitt einschränkt, in ihre Stellung der Freigabe des dem Durchgang der Gase gebotenen Querschnitts divergiert.

10. Auspufforgan nach einem der vorhergehenden Ansprüche, **dadurch gekennzeichnet, daß** die Schließklappe (100; 120) von ihrer Stellung des Verschlusses der Hauptleitung (16) auf eine weggerückte Stellung zu, in der die Hauptleitung (16) offen ist, in Richtung der Strömung der Gase in der Hauptleitung (16) beweglich montiert ist.

11. Auspufforgan nach einemder vorhergehenden Ansprüche, **dadurch gekennzeichnet, daß** die Hauptleitung (16) ein Organ zum Ausgleichen der Ausdehnung (16C) aufweist.
